# EUROPÄISCHE PATENTSCHRIFT

(11) **EP 0 645 618 B1**
(45) Veröffentlichungstag und Bekanntmachung des Hinweises auf die Patenterteilung: **28.04.1999**
(21) Anmeldenummer: 94114951.0
(22) Anmeldetag: 22.09.1994
(51) Int. Cl.: G01N 21/68

(54) **Verfahren und Vorrichtung zur Elementanalytik**
Method and device for elemental analysis
Procédé et appareil pour l'analyse élémentaire

(30) Priorität: 28.09.1993 DE 4333725
(43) Veröffentlichungstag der Anmeldung: 29.03.1995
(73) Patentinhaber: Institut für Festkörper- und Werkstofforschung Dresden e.V., 01069 Dresden (DE); Leco Technik GmbH, D-85551 Kirchheim b. München (DE)
(72) Erfinder: Hoffmann, Volker, Dr., D-01109 Dresden (DE); Uhlemann, Jörg, D-01099 Dresden (DE); Wetzig, Klaus, Prof. Dr., D-01237 Dresden (DE); Perzl, Peter R., D-82256 Fürstenfeldbruck (DE)
(74) Vertreter: Rauschenbach, Dieter

(56) Entgegenhaltungen:
- JOURNAL OF PHYSICS D. APPLIED PHYSICS, Bd.23, 1990, LETCHWORTH GB Seiten 1184 - 1192 F.TOCHIKUBO ET AL. 'Investigation of the high-frequency glow discharge in Ar at 13.56 MHz by spatiotemporal optical emission spectroscopy'
- JOURNAL OF PHYSICS D. APPLIED PHYSICS, Bd.24, Nr.6, 14. Juni 1991, LETCHWORTH GB Seiten 865 - 881 C.BÖHM ET AL. 'Spatially resolved optical emission and electrical properties of SiH4 RFdischarges at 13.56 MHz in a symmetric parallel-plate configuration'

## Beschreibung

Die Erfindung betrifft ein Verfahren und eine Vorrichtung zur Elementanalytik an leitenden und nichtleitenden Werkstoffproben mittels spektrometrischer Analyse des Plasmas einer über der Probe erzeugten, durch einen HF-Strom gestützten Niederdruck- Gasentladung.

In der Elementanalytik ist es bereits bekannt, HF-gestützte Niederdruck-Gasentladungen zur Analyse sowohl leitender als auch nichtleitender Festkörper einzusetzen (EP 0 296 920 B1, EP 0 407 030 A1). Hierbei werden HF-Stromversorgungseinheiten aus der PVD (Physical Vapour Deposition)- und der CVD (Chemical Vapour Deposition)- Technik eingesetzt. Diese Einheiten bestehen aus einem HF-Generator mit normiertem niederohmigen Ausgang (Widerstandswert z.B. 50 Ohm) zur Erzeugung der HF-Energie, einem Anpaßnetzwerk mit normiertem niederohmigen Eingang zur Anpassung der Niederdruck-Gasentladungsquelle an den Normwiderstand des HF-Generatorausgangs und schließlich einem Leistungs- und Fehlanpassungsmesser mit normiertem Wellenwiderstand in der Energieübertragungsleitung zwischen HF-Generator und Anpaßnetzwerk. Der Leistungs- und Fehlanpassungsmesser dient hierbei zur Messung der vom Generator zur Last hinlaufenden und der in den Generator reflektierten Leistung. Dieses Leistungs-Meßprinzip erfordert eine vollständige Impedanzanpassung durch das Anpaßnetzwerk.

Die eingesetzten HF-Generatoren arbeiten bei Frequenzen > 5 MHz, wobei meist die Industriefrequenzen 13,56 MHz, 27,12 MHz und 40,68 MHz zur Anwendung gelangen, und werden wahlweise nach der mit dem Leistungs- und Fehlanpassungsmesser ermittelten zur Last hinlaufenden Leistung oder nach dem Gleichspannungsanteil der nicht geerdeten Elektrode der Gasentladungsquelle gesteuert.

Aufgrund der Spezifik der Elementanalytik kommen Proben mit unterschiedlichen Abmessungen (⌀ 1-10 mm, Dicke 0,5-20 mm) und unterschiedlichen elektrischen Eigenschaften zum Einsatz. Die Niederdruck-Gasentladungsquellen ändern mit diesen Eigenschaften und mit dem Gasdruck in der Quelle ihre Impedanz, sind jedoch stets hochohmig.

Die bekannten Lösungen haben den Nachteil, daß die Wirkleistung in der Entladung und die Verlustleistung im Anpaßnetzwerk nicht getrennt erfaßt werden können (Winchester, Lazik und Marcus in Spectrochimica Acta, Vol. 46B, No. 4, pp. 483-499, 1991). Außerdem ist nachteilig, daß die Impedanz der benutzten hochohmigen Niederdruck-Gasentladungsquellen im Anpaßnetzwerk nicht in jedem Fall vollständig und technisch zuverlässig an den normierten Ausgang des Generators angepaßt werden kann. Das führt einerseits zu Problemen bei der Energieübertragung und andererseits zu Fehlern bei der verwendeten Leistungsmessung.

Der Erfindung liegt die Aufgabe zugrunde, ein Verfahren und eine Vorrichtung zur Elementanalytik an elektrisch leitenden oder nichtleitenden Werkstoffproben auf der Basis der spektrometrischen Analyse des Plasmas einer über der Probe erzeugten und durch einen HF-Strom gestützten Niederdruck-Gasentladung so zu gestalten, daß eine prozeßnahe und genaue Leistungsmessung im Stromkreis der Gasentladung möglich ist, wobei gleichzeitig eine Energieübertragungsleitung mit normierter Impedanz vermieden und eine zuverlässigen HF-Stromversorgung gewährleistet sein soll.

Diese Aufgabe ist nach der Erfindung mit den in den Patentansprüchen dargestellten Mitteln gelöst.

Das erfindungsgemäße Verfahren ist hierbei dadurch gekennzeichnet, daß über der Gasentladungsstrecke die HF-Spannung und in dem die Gasentladung speisenden Stromkreis gleichzeitig phasenrichtig der HF-Strom gemessen wird, wobei die sich daraus ergebenden Größen der Wirkleistung oder der Wirkleistung und der Frequenz sowie in an sich bekannter Weise die Größe des Gleichspannungsanteils zur Steuerung der HF-Stromversorgungseinheit und/oder zur Quantifizierung elementanalytischer Werte mittels Datenverarbeitung verwendet werden.

Die Vorrichtung basiert auf einer Anordnung, welche eine Quelle zur Erzeugung einer Niederdruck-Gasentladung und zur Aufnahme der Werkstoffprobe sowie eine HF-Stromversorgungseinheit enthält. Erfindungsgemäß ist die Vorrichtung dadurch gekennzeichnet, daß parallel zur Niederdruck-Gasentladungsquelle ein Spannungsmesser und in dem die Gasentladung speisenden Stromkreis ein Strommesser geschaltet ist, daß die Meßwertausgänge des Spannungsmessers und des Strommessers an eine Meßwertverarbeitungseinheit zur Ermittlung der Wirkleistung, der Frequenz und des Gleichspannungsanteils angeschlossen sind und daß die Meßwertverarbeitungseinheit ausgangsseitig mit der HF-Stromversorgungseinheit zu deren Steuerung verbunden und/oder mit einer Datenverarbeitungseinrichtung zur Quantifizierung elementanalytischer Werte gekoppelt ist.

Die Datenverarbeitungseinrichtung dient zur Quantifizierung der bei der Spektroskopie erhaltenen elementanalytischer Werte, d.h. zur Auswertung der Messungen.

Bei der Quantifizierung werde mit Hilfe der erfindungsgemäß ermittelten Größen der Wirkleistung oder der Wirkleistung und der Frequenz die aus Anderungen der Plasmaparameter resultierenden Einflüsse auf die elementanalytischen Werte eliminiert. Änderungen der Plasmaparameter treten während des spektroskopischen Prozesses infolge des stattfindenden Sputterabtrages und der sich dabei verändemden elektrischen Eigenschaften der untersuchten Probe ein. Dies ist im besonderen Maße bei Schichtanalysen der Fall, jedoch auch im Zusammenhang mit Probenwechseln.

Die erfindungsgemäß vorgesehene Maßnahme einer datenverarbeitungsgestützten Elimination solcher aus Plasmaänderungen resultierenden Einflüsse auf die elementanalytischen Werte ist ein besonders vorteilhaftes Merkmal der vorliegenden Erfindung.

Gemäß einer vorteilhaften Ausgestaltung der erfindungsgemäßen Vorrichtung ist die Niederdruck-Gasentladungsquelle mit einem Koppelkondensator über eine induktive oder über eine kapazitive Anzapfung direkt in den Schwingkreis der HF-Stromversorgungseinheit einbezogen. Der Schwingkreis kann hierbei in zweckmäßiger Weise induktiv oder kapazitiv abstimmbar ausgeführt sein.

Die Erfindung zeichnet sich gegenüber dem Stand der Technik insbesondere durch eine prozeßnahe und genaue Leistungsmessung im Stromkreis der Gasentladung aus und erfordert keine Energieübertragungsleitung mit normierter Impedanz. Darüber hinaus ist mit der vorgesehenen Einbeziehung der Niederdruck-Gasentladungsquelle in den Schwingkreis der HF-Stromversorgungseinheit in jedem Fall eine zuverlässige HF-Stromversorgung gewährleistet. Aufgrund dieser Vorteile wird die Methode der Elementanalytik an leitenden und nichtleitenden Werkstoffproben mittels spektrometrischer Analyse des Plasmas einer durch einen HF-Strom gestützten Niederdruck-Gasentladung qualitativ erheblich verbessert.

Nachstehend ist die Erfindung an einem Ausführungsbeispiel näher erläutert. In den zugehörigen Zeichnungen zeigen
- Fig. 1: in schematischer Darstellung eine Anordnung zur Erzeugung einer HF-gestützten Niederdruck-Gasentladung für die spektrometrische Elementanalyse,
- Fig. 2: ein Meßkurvendiagramm,
- Fig. 3: ein elementanalytisches Diagramm.

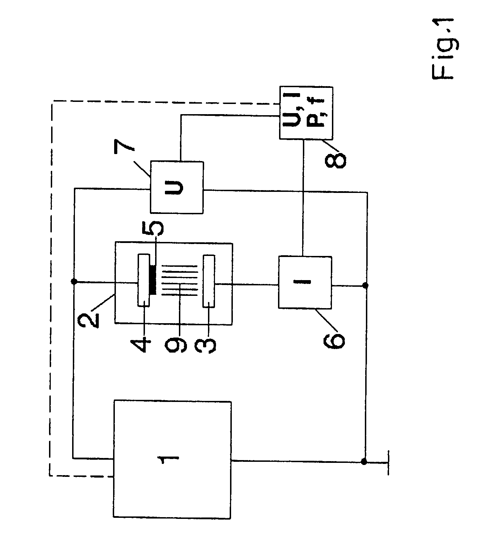

Bei der in Fig. 1 dargestellten Anordnung speist eine HF-Stromversorgungseinheit 1 eine Niederdruck-Gasentladungsquelle 2 . Die Niederdruck-Gasentladungsquelle 2 ist mit einer HF-Abschirmung versehen und enthält eine geerdete Elektrode 3 sowie eine nicht geerdete Elektrode 4, welche die Werkstoffprobe 5 kontaktiert. Bei der Werkstoffprobe 5 handelt es sich im vorliegenden Beispiel um eine mit 4 µm Zinkoxid beschichtete Quarzglasscheibe. Als HF-Stromversorgungseinheit 1 ist ein regelbarer 1 kW HF-Generator mit 7 MHz Arbeitsfrequenz verwendet, der über eine induktive Anzapfung des Generatorschwingkreises und einen Koppelkondensator mit der nicht geerdete Elektrode 4 verbunden ist.

Im die Niederdruck-Gasentladungsquelle 2 speisenden Stromkreis ist ein Strommesser 6 angeordnet und parallel zur Niederdruck-Gasentladungsquelle 2 ist ein Spannungsmesser 7 angeschlossen, deren Meßwertausgänge mit einer Meßwertverarbeitungseinheit 8 verbunden sind. Bei der Meßwertverarbeitungseinheit 8 handelt es sich hier um einen digitalen Speicheroszillographen mit internen Rechner.

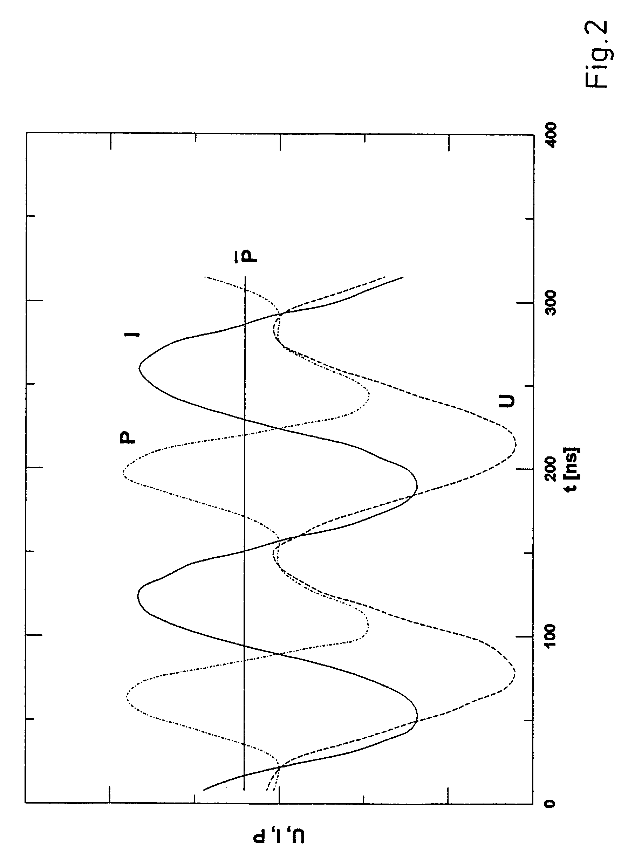

Aus dem Diagramm gemäß Fig. 2 sind die während der Entladung erhaltenen Meßkurven der HF-Spannung U, des gleichzeitig phasenrichtig gemessenen HF-Stromes I und die hieraus berechnete Leistungskurve P ersichtlich. Die Wirkleistung P als Mittelwert dient zur manuellen Steuerung der HF-Stromversorgungseinheit 1.

Während der Analyse wird die Werkstoffprobe 5 schichtweise abgetragen und im Plasma 9 der Niederdruck-Gasentladungsquelle 2 zur Emission von Licht angeregt. Dieses wird mit einem in der Zeichnung nicht dargestellten optischen Spektrometer spektral zerlegt.

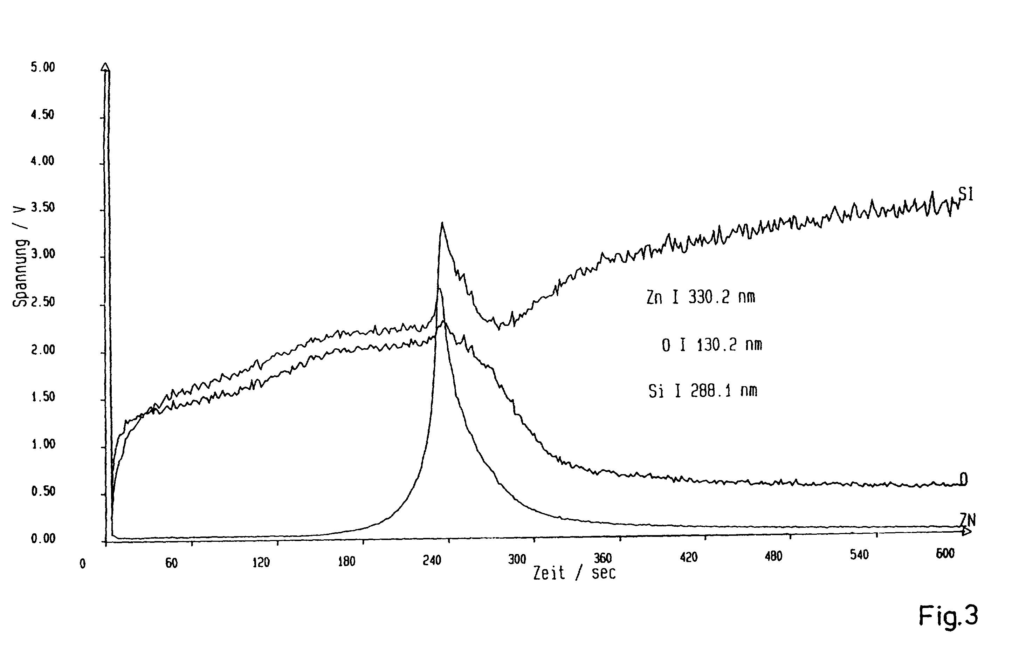

In Fig. 3 ist die qualitative Analyse des vom Plasma in der Niederdruck-Gasentladungsquelle 2 emittierten Lichtes der Elemente der im Beispiel analysierten elektrisch nichtleitenden Werkstoffprobe 5 dargestellt. Der ersichtliche zeitliche Verlauf der Intensität einiger charakteristischer Spektrallinien von Elementen der Werkstoffprobe 5 spiegelt die Konzentration der Elemente in Abhängigkeit von der Tiefe wider. Die einander ähnlichen Kurvenverläufe von Zn und O im Gebiet der ZnO-Schicht zeigen die gute Korrelation der Intensitäten mit den vorliegenden Elementkonzentrationen.

## Patentansprüche

1. Verfahren zur Elementanalytik an elektrisch leitenden oder nichtleitenden Werkstoffproben, bei dem das Plasma einer Niederdruck-Gasentladung, die durch einen HF-Strom gestützt ist, spektrometrisch analysiert wird, **dadurch gekennzeichnet,** daß über der Gasentladungsstrecke die HF-Spannung und in dem die Gasentladung speisenden Stromkreis gleichzeitig phasenrichtig der HF-Strom gemessen wird, wobei die sich daraus ergebenden Größen der Wirkleistung oder der Wirkleistung und der Frequenz sowie in an sich bekannter Weise die Größe des Gleichspannungsanteils zur Steuerung der HF-Stromversorgungseinheit und/oder zur Quantifizierung elementanalytischer Werte mittels Datenverarbeitung verwendet werden.

2. Vorrichtung zur Elementanalytik an elektrisch leitenden oder nichtleitenden Werkstoffproben, bei der das Plasma (9) einer Niederdruck-Gasentladung, die durch einen HF-Strom gestützt ist, spektrometrisch analysiert wird, enthaltend eine Quelle (2) zur Erzeugung einer Niederdruck-Gasentladung und zur Aufnahme der Werkstoffprobe (5) sowie eine HF-Stromversorgungseinheit (1), **dadurch gekennzeichnet**, daß parallel zur Niederdruck-Gasentladungsquelle (2) ein Spannungsmesser (7) und in dem die Gasentladung speisenden Stromkreis ein Strommesser(6) geschaltet ist, daß die Meßwertausgänge des Spannungsmessers (7) und des Strommessers (6) an eine Meßwertverarbeitungseinheit (8) zur Ermittlung der Wirkleistung, der Frequenz und des Gleichspannungsanteils angeschlossen sind und daß die Meßwertverarbeitungseinheit (8) ausgangsseitig mit der HF-Stromversorgungseinheit(1) zu deren Steuerung verbunden und/oder mit einer Datenverarbeitungseinrichtung zur Quantifizierung elementanalytischer Werte gekoppelt ist.

3. Vorrichtung nach Anspruch 2, **dadurch gekennzeichnet,** daß die Niederdruck-Gasentladunsquelle (2) mit einem Koppelkondensator über eine induktive oder eine kapazitive Anzapfung direkt in den Schwingkreis der HF-Stromversorgungseinheit (1) einbezogen ist.

4. Vorrichtung nach Anspruch 3, **dadurch gekennzeichnet,** daß der Schwingkreis der HF-Stromversorgungseinheit (1) induktiv oder kapazitiv abstimmbar ausgeführt ist.

## Claims

1. Method for elemental analysis on electrically conductive or non-conductive material samples, in which the plasma of a low-pressure gas discharge, which is supported by a HF current, is analyzed spectrometrically, characterized in that the HF voltage is measured over the gas discharge path and the HF current is measured in the correct phase relation at the same time in the electric circuit feeding the gas discharge, the resulting quantities of the effective power or of the effective power and the frequency and in a known manner the quantity of the direct voltage portion being used to control the HF power supply unit and/or to quantify elemental analytical values by means of data processing.

2. Device for elemental analysis on electrically conductive or non-conductive material samples, in which the plasma (9) of a low-pressure gas discharge, which is supported by a HF current, is analyzed spectrometrically, containing a source (2) for generating a low-pressure gas discharge and for taking up the material sample (5), and a HF power supply unit (1), characterized in that a voltmeter (7) is connected in parallel to the low-pressure gas discharge source (2) and an ammeter (6) is connected in the electric circuit feeding the gas discharge, that the measured-value outputs of the voltmeter (7) and of the ammeter (6) are connected to a measured-value processing unit (8) to ascertain the effective power, frequency and direct voltage portion and that the measured-value processing unit (8) is connected on the output side to the HF power supply unit (1) to control it and/or is coupled to a data processing device for quantifying elemental analytical values.

3. Device according to claim 2, characterized in that the low-pressure gas discharge source (2) is included with a coupling capacitor directly in the oscillating circuit of the HF power supply unit (1) via an inductive or capacitive tapping point.

4. Device according to claim 3, characterized in that the oscillating circuit of the HF power supply unit (1) is executed to be inductively or capacitively tunable.

## Revendications

1. Procédé d'analyse élémentaire pour des échantillons de matériaux conducteurs ou non conducteurs électriques, selon lequel on analyse par spectrométrie le plasma d'une décharge de gaz basse pression assistée par un courant de haute fréquence HF,
caractérisé en ce qu'
- on mesure la tension HF sur le chemin de décharge de gaz et on mesure, en même temps, en phase, le courant HF du circuit électrique alimentant la décharge de gaz,
- on utilise les grandeurs résultant de cette mesure, pour la puissance effective ou la puissance effective et la fréquence ainsi que de manière connue en soi, la grandeur de la composante de tension continue, pour commander l'unité d'alimentation en courant à haute fréquence HF et/ou pour quantifier les valeurs d'analyse élémentaire par un traitement de données.

2. Dispositif d'analyse élémentaire appliqué à des échantillons de matériaux conducteurs ou non conducteurs électriques, selon lequel on analyse par spectrométrie, le plasma (9) d'une décharge de gaz basse pression assistée par un courant haute fréquence HF, comprenant une source (2) générant une décharge de gaz basse pression et recevant l'échantillon de matériau (5) ainsi qu'une unité d'alimentation en courant haute fréquence HF (1),
caractérisé par
- un dispositif de mesure de tension (7) en parallèle à la source de décharge de gaz basse pression (2) et un dispositif de mesure de courant (6) dans le circuit électrique alimentant la décharge de gaz,
- les valeurs fournies en sortie par le dispositif de mesure de tension (7) et le dispositif de mesure de courant (6) étant appliquées à une unité de traitement de valeurs de mesures (8) pour déterminer le rendement effectif, la fréquence et la composante de tension continue et
- la sortie de l'unité de traitement de valeurs de mesures (8) est reliée à l'unité d'alimentation en courant haute fréquence HF (1) pour commander cette unité et/ou à une installation de traitement de données pour quantifier les valeurs de l'analyse élémentaire.

3. Dispositif selon la revendication 2,
caractérisé en ce que
la source de décharge de gaz (2) basse pression est intégrée par un condensateur de couplage, par une prise inductive ou capacitive, directement au circuit oscillant de l'unité d'alimentation en courant haute fréquence HF (1).

4. Dispositif selon la revendication 3,
caractérisé en ce que
le circuit oscillant de l'unité d'alimentation en courant HF (1) est accordé par un moyen inductif ou capacitif.
